# EUROPEAN PATENT APPLICATION

(11) **EP 4 621 083 A1**
(43) Date of publication of application: **24.09.2025**
(21) Application number: 25157914.0
(22) Date of filing: 14.02.2025
(51) Int. Cl.: C22B 26/12, C01D 15/08, H01M 10/54

(54) **METHOD FOR RECOVERING LITHIUM CARBONATE FROM CATHODE MATERIAL OF WASTED LITHIUM ION BATTERY**

(30) Priority: 06.03.2024 KR 20240032238
(71) Applicant: EcoRnS Co., Ltd, Busan 48058 (KR)
(72) Inventor: Yoo, Sang Hoon, 48119 Busan (KR); Wang, Jei Pil, 48524 Busan (KR); Kim, Moon Sung, 47816 Busan (KR); Lim, Jin Ho, 48431 Busan (KR); Lee, Sun Joo, 48431 Busan (KR)
(74) Representative: Witte, Weller & Partner Patentanwälte mbB

(57) **Abstract**

The purpose of the present disclosureis to provide a method for recovering lithium carbonate from cathode material of wasted lithium-ion batterywhere an environment friendly process is applied to improve the leaching rate of lithium.

In order to achieve the purpose, the method includes steps of: (a) forming a pulp by adding a lithium iron phosphate (LiFePO₄) cathode active material of the wasted lithium-ion battery to water; (b) introducing a reducing agent solution and carbon dioxide gas into the pulp to perform aqueous leaching, and then separating a solid-phase material from a liquid phase containing lithium carbonate (Li₂CO₃); and (c) obtaining the lithium carbonateby crystallizing a solution obtained from the liquid phase containing the lithium carbonate.

## Description

### CROSS-REFERENCE TO RELATED APPLICATION

This application claims priority to Korean Patent Application No. 10-2024-0032238 filed on March 6, 2024, the contents of which is incorporated by reference in its entirety.

### BACKGROUND OF THE DISCLOSURE

### 1. Field of the Disclosure

The present disclosure relates to a method for recovering lithium carbonate from cathode material of wasted lithium ion battery. In particular, the present disclosure relates to a method for recovering lithium carbonate from cathode material of wasted lithium ion battery where an environment friendly process is applied to improve the leaching rate of lithium.

### 2. Description of the Related Art

Lithium iron phosphate (LiFePO₄, LFP) is a material with an olivine structure, providing high stability by replacing cobalt with iron phosphate in conventional layered-structure cathode active materials like lithium cobalt oxide (LCO) batteries.

Due to its advantages such as high power output, low cost, low toxicity, excellent thermal stability, and high reversibility, the lithium iron phosphate (LFP) is recognized as one of the most promising cathode materials for lithium-ion batteries.

Lithium iron phosphate batteries using the LFP as the cathode material are now widely used in electric vehicles (EVs) and hybrid electric vehicles (HEVs).

With the rapid increase in demand for these lithium iron phosphate batteries, the issue of handling end-of-life lithium iron phosphate batteries is expected to emerge in the near future.

In particular, the toxic LiPF₆ and organic electrolytes containing metal ions in lithium iron phosphate batteries can migrate into the soil and groundwater if disposed of in landfills, causing environmental pollution. Therefore, the recycling process is crucial.

In conventional technology, methods for recycling lithium iron phosphate cathode materials can largely be classified into hydrometallurgical methods and direct regeneration methods.

Hydrometallurgical methods are primarily used for recycling end-of-life lithium-ion batteries. These methods involve leaching the cathode active material obtained from the pretreatment stage using inorganic acids such as sulfuric acid (H₂SO₄), hydrochloric acid (HCl), or phosphoric acid (H₃PO₄). The metals are then selectively separated and purified from the leach solution.

However, hydrometallurgical methods require a significant amount of alkali in the separation process due to the addition of high concentrations of acids needed to leach all metals in the cathode active material.

Direct regeneration methods involve recovering the cathode active material of end-of-life lithium-ion batteries, immersing it in an organic solvent, and reusing it as cathode active material for batteries.

However, direct regeneration methods often result in the recovered cathode material containing a large amount of impurities, and the structure is typically damaged after numerous charge-discharge cycles, leading to poor electrochemical performance upon reuse.

Therefore, after extensive effort, the applicant of the present disclosure has devised a method for recovering lithium carbonate from the cathode material of a wasted lithium-ion battery by improving the lithium leaching rate through an environment friendly process.

### SUMMARY OF THE DISCLOSURE

The purpose of the present disclosure, which aims to solve the aforementioned conventional problems, is to provide a method for recovering lithium carbonate from cathode material of wasted lithium-ion battery where an environment friendly process is applied to improve the leaching rate of lithium.

The problems to be solved by the present disclosure are not limited to those mentioned above, and other issues not explicitly stated will be clearly understood by those skilled in the art from the following description.

In order to achieve the purpose, an aspect of the present disclosure provides a method for recovering lithium carbonate from cathode material of wasted lithium-ion battery, the method comprising steps of: (a) forming a pulp by adding a lithium iron phosphate (LiFePO₄) cathode active material of the wasted lithium-ion battery to water; (b) introducing a reducing agent solution and carbon dioxide gas into the pulp to perform aqueous leaching, and then separating a solid-phase material from a liquid phase containing lithium carbonate (Li₂CO₃); and (c) obtaining the lithium carbonate by crystallizing a solution obtained from the liquid phase containing the lithium carbonate.

In some exemplary embodiments, the lithium iron phosphate cathode active material may include at least one selected from a group consisting of carbon (C) and sulfur (S).

In some exemplary embodiments, a concentration of the pulp may be 1% to 20%.

In some exemplary embodiments, in the step (b), the reducing agent solution may be a hydrogen peroxide (H₂O₂) solution.

In some exemplary embodiments, in the step (b), the carbon dioxide gas may be introduced at a rate of 10 L/min. or less.

In some exemplary embodiments, in the step (b), a carbonation reactionmay occur, and a reaction time of the carbonation reaction may be within 2 hours.

In some exemplary embodiments, in the step (c), a recovery rate of the lithium carbonate may be 92% to 95%.

In some exemplary embodiments,in the step (c), a purity of the lithium carbonate obtained may be 99.5% or more.

According to an exemplary embodiment of the present disclosure, a method is provided for recovering lithium carbonate from the cathode material of a wasted lithium-ion battery by improving the lithium leaching rate through an environment friendly process.

According to an exemplary embodiment of the present disclosure, a method is provided for recovering lithium carbonate from the cathode material of a wasted lithium-ion battery by improving the lithium recovery rate using a hydrogen peroxide solution.

According to an exemplary embodiment of the present disclosure, a method is provided for recovering lithium carbonate from the cathode material of a wasted lithium-ion battery by using carbon dioxide gas, thereby contributing to the carbon neutrality.

The effects of the present disclosure are not limited to the aforementioned effects and should be understood to include all effects that can be inferred from the configurations of the present disclosure described in the detailed description or the claims.

### BRIEF DESCRIPTION OF THE DRAWINGS

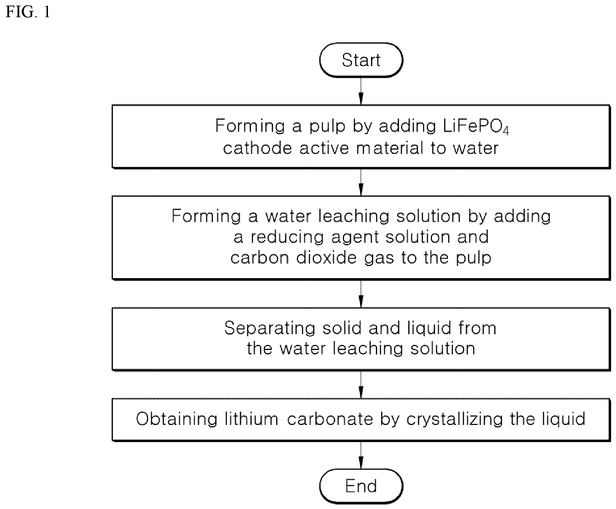

FIG. 1 is a process flow diagram of a method for recovering lithium carbonate from cathode material of wasted lithium-ion battery according to an exemplary embodiment of the present disclosure.

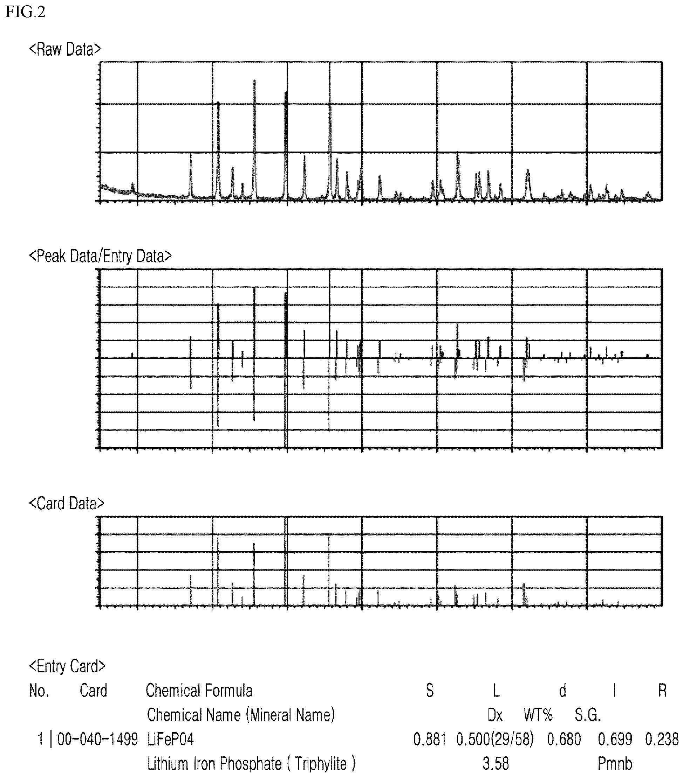

FIG. 2 is an X-ray diffraction diagram of lithium iron phosphate (LiFePO₄) powder in a method for recovering lithium carbonate from cathode material of wasted lithium-ion battery according to an exemplary embodiment of the present disclosure.

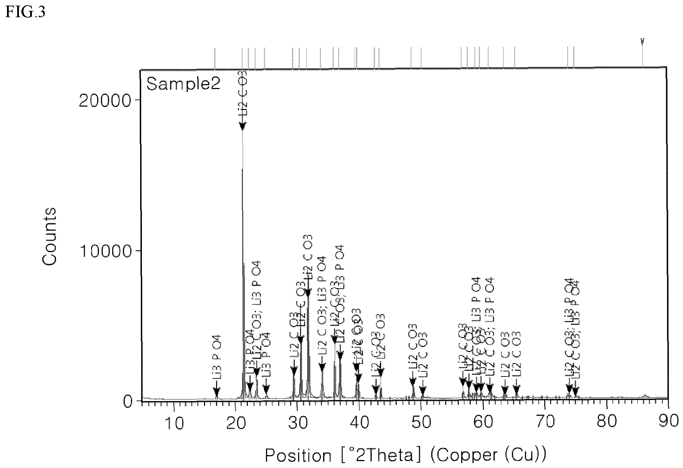

FIG. 3 is an X-ray diffraction diagram of the lithium compound obtained by solid-liquid separation of the aqueous leaching solution in the first test of Exemplary Embodiment 1-3, followed by vacuum distillation, in a method for recovering lithium carbonate from cathode material of wasted lithium-ion battery according to an exemplary embodiment of the present disclosure.

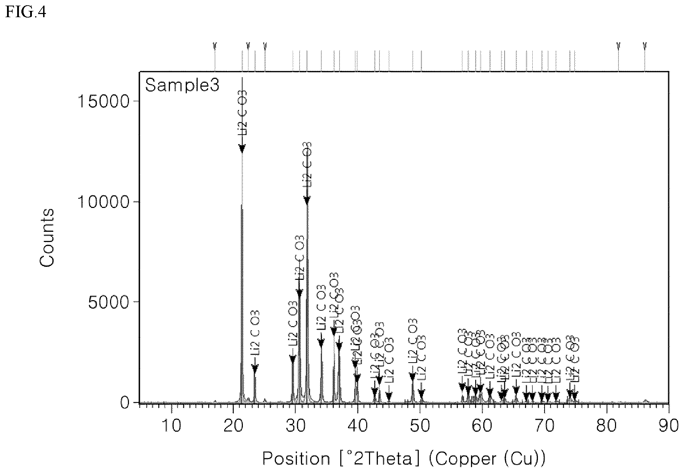

FIG. 4 is an X-ray diffraction diagram of the lithium compound obtained by solid-liquid separation of the aqueous leaching solution in the second test of Exemplary Embodiment 1-3, followed by vacuum distillation, in a method for recovering lithium carbonate from cathode material of wasted lithium-ion battery according to an exemplary embodiment of the present disclosure.

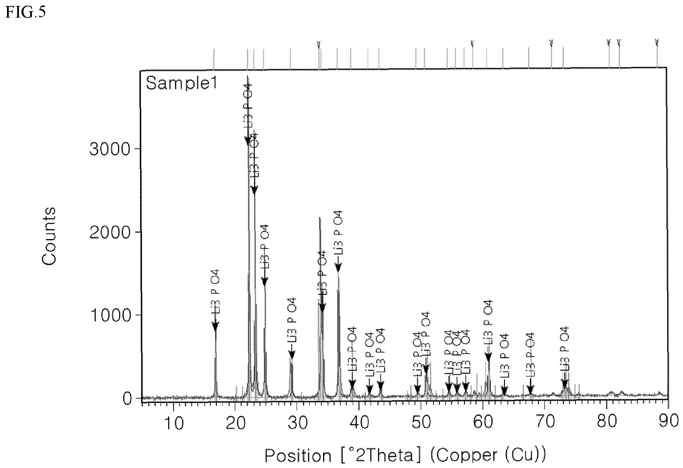

FIG. 5 is an X-ray diffraction diagram of the lithium compound obtained by solid-liquid separation of the aqueous leaching solution in the third test of Exemplary Embodiment 1-3, followed by vacuum distillation, in a method for recovering lithium carbonate from cathode material of wasted lithium-ion battery according to an exemplary embodiment of the present disclosure.

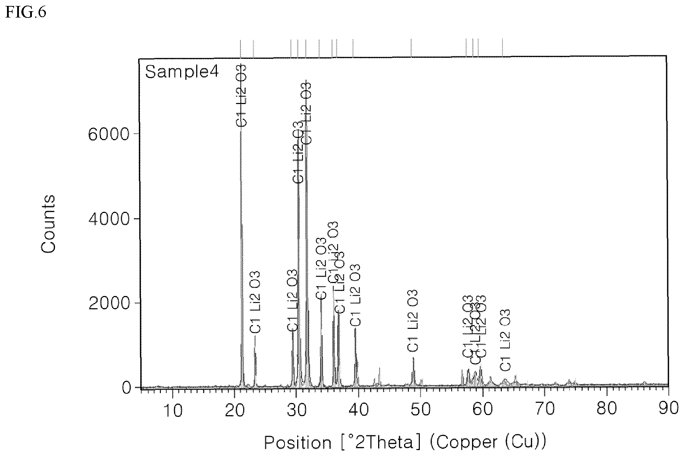

FIG. 6 is an X-ray diffraction diagram of the lithium carbonate obtained in Exemplary Embodiment 1-5 of a method for recovering lithium carbonate from cathode material of wasted lithium-ion battery according to an exemplary embodiment of the present disclosure.

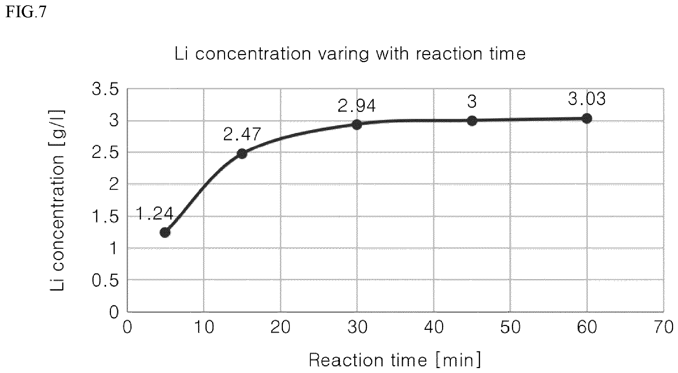

FIG. 7 is a graph showing changes in Li concentration with reaction time in a method for recovering lithium carbonate from cathode material of wasted lithium-ion battery according to an exemplary embodiment of the present disclosure.

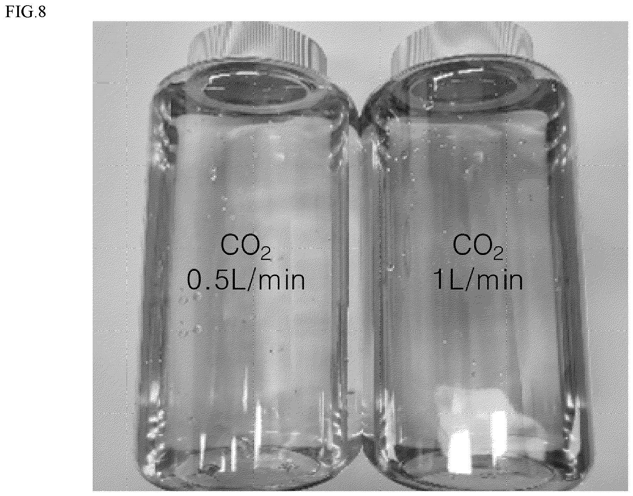

FIG. 8 is a photograph of the liquid phase containing lithium carbonate obtained after solid-liquid separation of the aqueous leaching solution in a method for recovering lithium carbonate from cathode material of wasted lithium-ion battery according to an exemplary embodiment of the present disclosure.

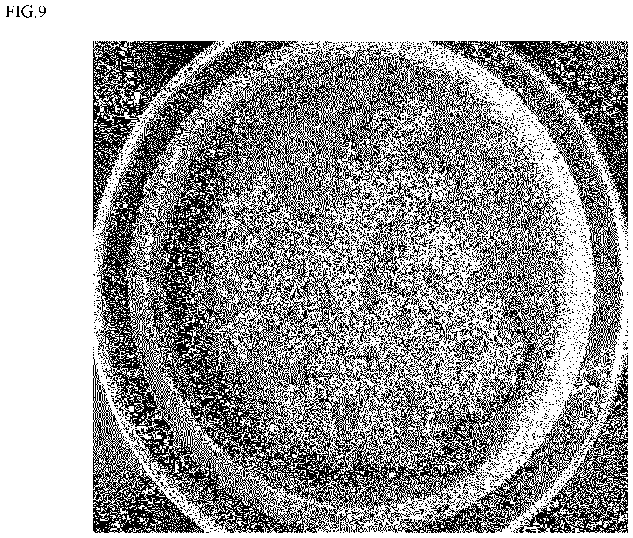

FIG. 9 is a photograph of the lithium carbonate obtained after solid-liquid separation of the aqueous leaching solution, followed by vacuum distillation,in a method for recovering lithium carbonate from cathode material of wasted lithium-ion battery according to an exemplary embodiment of the present disclosure.

### DETAILED DESCRIPTION OF THE DISCLOSURE

The purpose of the present disclosure, which aims to solve the aforementioned conventional problems, is to provide a method for recovering lithium carbonate from cathode material of wasted lithium-ion batterywhere an environment friendly processis applied to improve the leaching rate of lithium.

Before describing the present disclosure in detail, the terms or words used in this specification should not be construed as being unconditionally limited to their ordinary or dictionary meanings, and in order for the inventor of the present disclosure to describe his/her disclosure in the best way, concepts of various terms may be appropriately defined and used, and furthermore, the terms or words should be construed as means and concepts which are consistent with a technical idea of the present disclosure.

That is, the terms used in this specification are only used to describe preferred embodiments of the present disclosure, and are not used for the purpose of specifically limiting the contents of the present disclosure, and it should be noted that the terms are defined by considering various possibilities of the present disclosure.

Further, in this specification, it should be understood that, unless the context clearly indicates otherwise, the expression in the singular may include a plurality of expressions, and similarly, even if it is expressed in plural, it should be understood that the meaning of the singular may be included.

In the case where it is stated throughout this specification that a component "includes" another component, it does not exclude any other component, but may further include any other component unless otherwise indicated.

Further, hereinafter, in describing the present disclosure, a detailed description of a configuration determined that may unnecessarily obscure the subject matter of the present disclosure, for example, a detailed description of a known technology including the prior art may be omitted.

Hereinafter, exemplary embodiments of the present disclosure will be described in detail with reference to related drawings.

FIG. 1 is a process flow diagram of a method for recovering lithium carbonate from cathode material of wasted lithium-ion battery according to an exemplary embodiment of the present disclosure.

As illustrated in FIG. 1, the method for recovering lithium carbonate from cathode material of wasted lithium-ion battery may include steps of: (a) forming a pulp by adding a lithium iron phosphate (LiFePO₄) cathode active material of the wasted lithium-ion battery to water; (b) introducing a reducing agent solution and carbon dioxide gas into the pulp to perform aqueous leaching, and then separating a solid-phase material from a liquid phase containing lithium carbonate (Li₂CO₃); and (c) obtaining the lithium carbonateby crystallizing a solution obtained from the liquid phase containing the lithium carbonate.

In particular, the method for recovering lithium carbonate from cathode material of wasted lithium-ion battery may include steps of: (a) forming a pulp by adding a lithium iron phosphate (LiFePO₄) cathode active material of the wasted lithium-ion battery to water; (b) introducing a hydrogen peroxide (H₂O₂) solution and carbon dioxide gas into the pulp to perform aqueous leaching, and then separating a solid-phase material containing iron phosphate (FePO₄) from a liquid phase containing lithium carbonate (Li₂CO₃); and (c) obtaining the lithium carbonateby crystallizing a solution obtained from the liquid phase containing the lithium carbonate.

In the step (a), the pulp may be formed by introducing the lithium iron phosphate (LiFePO₄) cathode active material of the wasted lithium-ion battery into water.

The lithium iron phosphate (LiFePO₄, LFP), a representative Fe-based olivine cathode material, has a theoretical capacity of 170 mAh/g. Originally, the Fe³⁺/Fe²⁺ has an operating voltage of around 3.2 V. However, by substituting with the polyanion PO₄²⁻, a strong P-O covalent bond results in an operating voltage of approximately 3.4 V.

The LFP (LiFePO₄) is cheaper, more environment friendly, and has better high-temperature stability than cobalt (Co)-containing cathode materials. The LFT also offers the advantage of achieving over 90% of its theoretical capacity.

The wasted lithium-ion battery may refer to a lithium-ion battery that has been disassembled at the cell level after use.

The LFP (LiFePO₄) cathode active material of the wasted lithium-ion battery may be obtained in powder form by crushing and classifying LFP cathode scrap.

The LFP cathode active material may be crushed using a dry crusher, and the crushed LFP cathode active material may be sieved and classified to obtain it in powder form.

The type of dry crusher is not particularly limited and may follow conventional techniques and the general knowledge of a person skilled in the art. For example, the crusher may be a ball mill.

The particle size of the classified LFP cathode active material powder may follow the general knowledge of a person skilled in the art and, for example, may be 500 µm or less.

The shape of the classified LFP cathode active material powder may be an irregular spherical secondary particle formed by the aggregation of nano-scale primary particles, but is not limited thereto.

The LFP cathode active material powder obtained through the crushing and classifying process of the wasted lithium-ion battery may contain elements other than lithium (Li), iron (Fe), and phosphorus (P).

The lithium iron phosphate cathode active material may include at least one selected from a group consisting of carbon (C) and sulfur (S).

The content of carbon and sulfur in the lithium iron phosphate cathode active material can be analyzed using an elemental analyzer.

The content of carbon (C) in the lithium iron phosphate cathode active material may be 30 wt% or less. Preferably, the content of carbon (C) in the lithium iron phosphate cathode active material may be 5 wt% or less.

In the related technical field, depending on the carbon content, the cathode active material powder of a wasted lithium-ion battery may be classified as cell powder, black mass, or black powder. Here, the cell powder is defined as the lowest grade, containing the highest carbon content.

The cell powder may refer to the crushed material obtained from secondary batteries made using impure raw powders and indicate that the anode active material, carbon, is present at 30 wt% or less.

The black mass may refer to the powder obtained by collecting and crushing wasted secondary batteries, indicating that the anode active material, carbon, is present at 5 wt% or less.

The black powder may refer to the powder obtained by collecting and crushing wasted secondary batteries generated due to defective cathode material powder during the manufacturing process of secondary battery cathode materials. The black powder indicates that the anode active material, carbon, is present at the lowest content.

The lithium carbonate may be obtained through the recovery method, using the aforementioned LFP cathode active material powder from the wasted lithium-ion battery.

Since the carbon content can affect the lithium recovery rate, carbon analysis is essential for the LFP cathode active material subjected to the crushing and classifying process.

The sulfur (S) content in the lithium iron phosphate cathode active material may be 0.1 wt%.

The step (b) involves introducing a reducing agent solution and carbon dioxide gas into the pulp to perform aqueous leaching, and then separating a solid-phase material from a liquid phase containing lithium carbonate (Li₂CO₃).

The lithium does not leach without a reducing agent, because the standard reduction potential of lithium is significantly lower than that of hydrogen ions. Therefore, an appropriate reducing agent must be added to the pulp to increase the reduction potential of lithium and enhance the reaction rate.

The concentration of the pulp may be 1% to 20%. Preferably, the concentration of the pulp may be 6%.

The concentration of the pulp is an important factor affecting the leaching rate of LiFePO₄. The total dissolved solids (TDS) in the liquid phase obtained after aqueous leaching with the appropriate concentration of pulp, reducing agent solution, and carbon dioxide can be measured to predict the recovery rate of lithium carbonate finally obtained.

When the concentration of the pulp is less than 1%, the introduced amount oflithium iron phosphate (LiFePO₄) powder is too low, and thus the lithium carbonate may not be recovered.

However, when the concentration of the pulp exceeds 20%, assuming complete phase transformation theoretically to lithium carbonate relative to the amount of lithium iron phosphate (LiFePO₄) powder added, the TDS may increase significantly, leading only to an increase in raw material consumption without significantly affecting the recovery rate and purity of lithium carbonate.

In the step (b), the reducing agent solution may be a hydrogen peroxide (H₂O₂) solution.

In the case where the reducing agent solution is not added to the pulp, the lithium iron phosphate (LiFePO₄) cathode active material in the pulp may leach only in trace amounts, significantly reducing the leaching and recovery rates of lithium carbonate.

In step (b), the carbon dioxide gas may be introduced at a rate of 10 L/min. or less.

When the carbon dioxide gas is introduced at a rate exceeding 10 L/min., only the carbon dioxide gas consumption may increase without significantly affecting the carbonation reaction or the recovery rate and purity of lithium carbonate.

In the step (b), the carbonation reaction may occur, and a reaction time of the carbonation reaction may be within 2 hours, preferably within 1 hour, and more preferably between 30 to 60 minutes.

The carbonation reaction that occurs in the aqueous leaching process may be represented by Reaction Formula 1 below.

[Reaction Formula 1] **2LiFePO₄(s) + CO₂(g) + H₂O₂(a)** → **Li₂CO₃(a) + FePO₄(s) + H₂O**

The carbonation reaction may be performed under the condition of a room temperature of 25°C.

In the carbonation reaction, the process of extracting lithium (Li) from the lithium iron phosphate (LiFePO₄) powder results in delithiation by hydrogen peroxide (H₂O₂) and carbon dioxide (CO₂), obtaining lithium carbonate (Li₂CO₃) dissolved in the liquid phase through the chemical reaction between Li⁺ ions and CO₂. Here, CO₂ may act as a buffer to suppress the formation of lithium hydroxide (LiOH), and the solid-phase iron phosphate (FePO₄) may be formed in the initial stage of the carbonation reaction according to nucleation and nuclear growth mechanisms.

When the reaction time of the carbonation process is less than 30 minutes, the lithium iron phosphate (LiFePO₄) present in the pulp may not be sufficiently delithiated by the hydrogen peroxide (H₂O₂) and carbon dioxide (CO₂), resulting in a decreased concentration of Li⁺ ions in the liquid phase and consequently reducing the recovery rate and purity of the lithium carbonate.

When the reaction time of the carbonation processexceeds 2 hours, only the process time for lithium carbonate recovery may increase without a significant increase in the concentration of Li⁺ions, which may not affect the recovery rate and purity of the lithium carbonate.

In step (b), the solid-phase material containing iron phosphate (FePO₄) and the liquid phase containing lithium carbonate(Li₂CO₃)may be separated using a vacuum filter.

The type of vacuum filter is not particularly limited and may follow known techniques and the general knowledge of a person skilled in the art.

FIG. 8 is a photograph of the liquid phase containing lithium carbonate obtained after solid-liquid separation of the aqueous leaching solution in a method for recovering lithium carbonate from cathode material of wasted lithium-ion battery according to an exemplary embodiment of the present disclosure.

As shown in FIG. 8, the liquid phase containing lithium carbonate (Li₂CO₃) may appear in yellow color, but not limited thereto. The trace amounts of Fe³⁺ ions generated during the carbonation reaction may be present in the liquid phase, resulting in a yellow-colored solution.

The step (c) involves obtaining the lithium carbonateby crystallizing a solution obtained from the liquid phase containing the lithium carbonate.

In step (c), the crystallization process may be performed by oven drying or vacuum distillation.

In the case where the solution obtained from the liquid phase containing lithium carbonate is dried in the oven, the process conditions may be a temperature of 105°C and a reaction time of 12 hours.

In this case, when the solution obtained from the liquid phase containing lithium carbonate is subjected to vacuum distillation, the specific surface area of the leachate (the solution obtained from the liquid phase containing lithium carbonate) can be maximized, energy costs can be reduced, and the recovery rate and purity of the crystallized lithium carbonate can be improved.

FIG. 9 is a photograph of the lithium carbonate obtained after solid-liquid separation of the aqueous leaching solution, followed by vacuum distillation,in a method for recovering lithium carbonate from cathode material of wasted lithium-ion battery according to an exemplary embodiment of the present disclosure.

The lithium carbonate (Li₂CO₃) may be recovered as shown in FIG. 9, through the aforementioned method.

In the step (c), a recovery rate of the lithium carbonate may be 92% to 95%.

In the step (c), a purity of the lithium carbonate obtained may be 99.5% or more.

Through the aforementioned recovery method, the lithium carbonate with a purity of 99% or higher can be obtained.

As described above, the method for recovering lithium carbonate from the cathode material of a wasted lithium-ion battery according to an exemplary embodiment of the present disclosure has the effect of improving the lithium leaching rate using a reducing agent solution through an environment friendly process.

Furthermore, the method for recovering lithium carbonate from the cathode material of a wasted lithium-ion battery according to an exemplary embodiment of the present disclosureis environment friendly because no harmful substances is used in the method, thus fundamentally reducing the cost of waste solution treatment.

In addition, the method for recovering lithium carbonate from the cathode material of a wasted lithium-ion battery according to an exemplary embodiment of the present disclosure provides a simple and efficient process for recovering lithium carbonate through a carbonation reaction using a reducing agent solution and carbon dioxide.

Hereinafter is described the effect of improving the lithium leaching rate through an environment friendly process in the method for recovering lithium carbonate from the cathode material of a wasted lithium-ion battery according to an exemplary embodiment of the present disclosure.

The lithium carbonate was recovered through the following exemplary embodiments.

### <Exemplary Embodiments> Method for Recovering Lithium Carbonate from Cathode Material of Wasted Lithium-Ion Battery

### <Exemplary Embodiment1-1> Component Analysis of LFP Powder

The LFP(LiFePO₄) cathode active material from a wasted lithium-ion battery disassembled at the cell level was prepared by crushing LFP cathode scrap using a ball mill and classifying it through sieving to obtain LFP powder with a particle size of approximately 450 µm. The components of the LFP powder were analyzed using an X-ray fluorescence spectrometer (XRF), an inductively coupled plasma optical emission spectrometer (ICP-OES), and an elemental analyzer. The analysis results are shown in Table 1 below.

**[Table1]**

| Element | Li | Fe | P | C | S |
|---|---|---|---|---|---|
| Content (wt%) | 4.2 | 28.8 | 17.1 | 3.29 | 0.11 |

Referring to Table 1, the LFP powder contained lithium (Li), iron (Fe), phosphorus (P), carbon (C), and sulfur (S), particularly with the carbon content being 5 wt% or less. Therefore, the LFP powder prepared in Exemplary Embodiment 1-1 was analyzed to be at the black mass level in the relevant technical field.

### <Exemplary Embodiment 1-2> Phase Analysis of LFP Powder

The LFP powder prepared in Exemplary Embodiment 1-1 was subjected to phase analysis using an X-ray diffractometer (XRD).

FIG. 2 is an X-ray diffraction diagramof lithium iron phosphate (LiFePO₄) powder in a method for recovering lithium carbonate from cathode material of wasted lithium-ion battery according to an exemplary embodiment of the present disclosure.

As shown in FIG. 2, the LFP powder prepared in Exemplary Embodiment 1-1 matched the LiFePO₄ phase corresponding to ICDD card 00-040-1499, and no impurity phases were detected. Therefore, it is presumed that no contamination or similar phenomena occurred during the pretreatment process of preparing the LFP cathode active material powder from the wasted lithium-ion battery.

### <Exemplary Embodiment 1-3> Effect of Hydrogen Peroxide Solution and Carbon Dioxide

120 g of the LFP powder prepared in Exemplary Embodiment 1-1 was added to 1 L of distilled water to prepare a pulp with a concentration of 12%. A hydrogen peroxide (H₂O₂) solution as the reducing agent and carbon dioxide (CO₂) gas at flow rates of 0.5 L/min. and 1 L/min. were introduced into the pulp, and the mixture was reacted for 2 hours to produce an aqueous leaching solution. The Total Dissolved Solids (TDS) of the prepared aqueous leaching solution was measured to estimate the leaching rate of the LFP. The process conditions and analysis results are shown in Table 2 below.

**[Table2]**

| Trial | LFP input amount (g) | Distilled water input amount (L) | CO₂ flow rate (L/min.) | Final *TDS (g/L) | H₂O₂addition status (O/X) |
|---|---|---|---|---|---|
| 1 | 120 | 1 | 0.5 | 11.7 | O |
| 2 | 120 | 1 | 1.0 | 13.6 | O |
| 3 | 120 | 1 | 1.0 | 2.57 | X |

Referring to Table 2, when the H₂O₂ solution was added, the TDS was 11.7 g/L at a CO₂ flow rate of 0.5 L/min in the first test, and the TDS was 13.6 g/L at a CO₂ flow rate of 1.0 L/min in the second test. Therefore, increasing the CO₂ flow rate increased the TDS, suggesting that the LFP leaching rate would also increase.

Meanwhile, when the CO₂ flow rate was kept constant at 1.0 L/min, the TDS in the second test with the addition of the H₂O₂ solution was 13.6 g/L, while in the third test without the addition of the H₂O₂ solution, the TDS was 2.57 g/L. Therefore, without the addition of the H₂O₂ solution, the TDS decreased significantly, indicating that the LFP leaching rate would also decrease significantly.

### <Exemplary Embodiment1-4> Phase Analysis of Lithium Carbonate Obtained after

### Vacuum Distillation

In Exemplary Embodiment 1-3 above, solid-liquid separation was performed on the aqueous leaching solution using a vacuum filter to separate the solid-phase material and the liquid phase containing lithium carbonate (Li₂CO₃).

FIG. 3 is an X-ray diffraction diagram of the lithium compound obtained by solid-liquid separation of the aqueous leaching solution in the first test of Exemplary Embodiment 1-3, followed by vacuum distillation, in a method for recovering lithium carbonate from cathode material of wasted lithium-ion battery according to an exemplary embodiment of the present disclosure.

FIG. 4 is an X-ray diffraction diagram of the lithium compound obtained by solid-liquid separation of the aqueous leaching solution in the second test of Exemplary Embodiment 1-3, followed by vacuum distillation, in a method for recovering lithium carbonate from cathode material of wasted lithium-ion battery according to an exemplary embodiment of the present disclosure.

FIG. 5 is an X-ray diffraction diagram of the lithium compound obtained by solid-liquid separation of the aqueous leaching solution in the third test of Exemplary Embodiment 1-3, followed by vacuum distillation, in a method for recovering lithium carbonate from cathode material of wasted lithium-ion battery according to an exemplary embodiment of the present disclosure.

As shown in FIGS. 3 to 5, the obtained liquid phase was charged into a reactor, and the lithium compound was crystallized at an internal temperature of 65°C under reduced pressure of -0.1 bar, yielding the crystallized lithium compound.

As shown in FIG. 3, the H₂O₂ solution was added, the lithium compound obtained in the first test with a CO₂ input amount of 0.5 L/min. showed the phases of Li₃PO₄and Li₂CO₃.

As shown in FIG. 4, when the H₂O₂ solution was added, the lithium compound obtained in the second test with a CO₂ input amount of 1.0 L/min. showed only the Li₂CO₃ phase. Therefore, it was confirmed that as the CO₂ input amount increased, pure lithium carbonate (Li₂CO₃) formed without impurities.

Meanwhile, as shown in FIG. 5, when the CO₂ flow rate was 1.0 L/min. in the third test, and no H₂O₂ solution was added, the obtained lithium compound exhibited only the Li₃PO₄ phase. Therefore, it was confirmed that lithium carbonate (Li₂CO₃) does not form in the absence of the H₂O₂ solution.

### <Exemplary Embodiment 1-5> Optimization of Carbon Dioxide Input Amount

Based on the TDS results analyzed in Exemplary Embodiment 1-3, the amount of LFP powder was adjusted, and a re-test was conducted. According to the TDS results analyzed in Exemplary Embodiment 1-3, assuming complete phase transformation to theoretical lithium carbonate based on the amount of LFP powder input, the TDS of the aqueous leaching solution was predicted to be 25.8 g/L or more. This value is approximately twice the TDS levels of the first and second tests. Therefore, in Exemplary Embodiment 1-5, the amount of LFP powder was adjusted, and the input amount of carbon dioxide was optimized.

60 g of the LFP powder prepared in the above Exemplary Embodiment 1-1 was added to 1 L of distilled water to prepare a pulp with a concentration of 6%. The prepared pulp was reacted for 1 hour with the addition of a hydrogen peroxide (H₂O₂) solution as the reducing agent and carbon dioxide (CO₂) gas at flow rates of 0.5 L/min. and 0.7 L/min. to produce an aqueous leaching solution. The prepared aqueous leaching solution was subjected to solid-liquid separation using a vacuum filter to separate the solid-phase material and the liquid phase containing lithium carbonate. The obtained liquid phase was placed into a reactor, and vacuum distillation was performed at an internal temperature of 105°C for 12 hours to obtain the crystallized lithium carbonate (Li₂CO₃). The Li concentration in the residue obtained after vacuum distillation was analyzed using an inductively coupled plasma optical emission spectrometer (ICP-OES). The Li recovery rate was calculated by considering the carbon content of the LFP powder analyzed in Exemplary Embodiment 1-1, which was 3.29 wt%, and the carbon content in the residue, which was 1.43 wt%. The process conditions and analysis results are shown in Table 3 below.

**[Table3]**

| Trial | LFP input amount (g) | Distilled water input amount (L) | H₂O₂addition status (O/X) | CO₂flow rate (L/min.) | Li concentration in residue (%) | *Li recovery rate (%) |
|---|---|---|---|---|---|---|
| 4 | 60 | 1 | O | 0.5 | 0.32 | 92.7 |
| 5 | 60 | 1 | O | 0.5 | 0.23 | 94.8 |
| 6 | 60 | 1 | O | 0.7 | 0.30 | 93.4 |
| 7 | 60 | 1 | O | 0.7 | 0.28 | 93.9 |

Referring to Table 3 above, when H₂O₂ solution and CO₂ gas were added to the pulp, the Li recovery rate was 90% or more. In particular, the highest recovery rate of 94.8% was shown in the fifth test.

FIG. 6 is an X-ray diffraction diagram of the lithium carbonate obtained in Exemplary Embodiment 1-5 of a method for recovering lithium carbonate from cathode material of wasted lithium-ion battery according to an exemplary embodiment of the present disclosure.

As shown in FIG. 6, the lithium compound obtained through aqueous leaching by adding both H₂O₂ solution and CO₂ gas to the pulp in Exemplary Embodiment 1-5 was confirmed to be in the Li₂CO₃ phase.

Meanwhile, in consideration of the amount of reducing agent solution and carbon dioxide relative to the input amount of LFP, it was confirmed that the conditions of the fourth test were optimal from an economic perspective.

### <Exemplary Embodiment 1-6> Optimization of Reaction Time

60 g of the LFP powder prepared in the above Exemplary Embodiment 1-1 was added to 1 L of distilled water to prepare a pulp with a concentration of 6%. A hydrogen peroxide (H₂O₂) solution as the reducing agent and carbon dioxide (CO₂) gas at a flow rate of 0.5 L/min. were introduced to produce an aqueous leaching solution based on various reaction times. The Li concentration in the prepared aqueous leaching solution was analyzed using an inductively coupled plasma optical emission spectrometer (ICP-OES). The process conditions and analysis results are shown in Table 4 below.

**[Table4]**

| Reaction time (min.) | LFP input amount (g) | Distilled water input amount (L) | H₂O₂ addition status (O/X) | CO₂flow rate (L/min.) | Li concentration in residue (g/L) |
|---|---|---|---|---|---|
| 5 | 60 | 1 | O | 0.5 | 1.24 |
| 15 | 60 | 1 | O | 0.5 | 2.47 |
| 30 | 60 | 1 | O | 0.5 | 2.94 |
| 45 | 60 | 1 | O | 0.5 | 3.00 |
| 60 | 60 | 1 | O | 0.5 | 3.03 |

FIG. 7 is a graph showing changes in Li concentration with reaction time in a method for recovering lithium carbonate from cathode material of wasted lithium-ion battery according to an exemplary embodiment of the present disclosure.

Referring to Table 4 and FIG. 7, the carbonation reaction of the LFP powder, hydrogen peroxide, and carbon dioxide in the pulp proceeded rapidly until the reaction time reached 30 minutes, resulting in a sharp increase in the Li concentration in the aqueous leaching solution.

Meanwhile, after 30 minutes, the Li concentration continued to increase as the reaction time increased, but the extent of the increase was minimal. Therefore, from an economic perspective, the optimal reaction time for this process was confirmed to be within 30 minutes to 2 hours.

In the above, although several preferred embodiments of the present disclosure have been described with some examples, the descriptions of various exemplary embodiments described in the "Detailed Description of the Disclosure" item are merely exemplary, and it will be appreciated by those skilled in the art that the present disclosure can be variously modified and carried out or equivalent executions to the present disclosure can be performed from the above description.

In addition, since the present disclosure can be implemented in various other forms, the present disclosure is not limited by the above description, and the above description is for the purpose of completing the disclosure of the present disclosure, and the above description is just provided to completely inform those skilled in the art of the scope of the present disclosure, and it should be known that the present disclosure is only defined by each of the claims.

According to an exemplary embodiment of the present disclosure, a method is provided for recovering lithium carbonate from the cathode material of a wasted lithium-ion battery by improving the lithium leaching rate through an environment friendly process.

According to an exemplary embodiment of the present disclosure, a method is provided for recovering lithium carbonate from the cathode material of a wasted lithium-ion battery by improving the lithium recovery rate using a hydrogen peroxide solution.

According to an exemplary embodiment of the present disclosure, a method is provided for recovering lithium carbonate from the cathode material of a wasted lithium-ion battery by using carbon dioxide gas, thereby contributing to the carbon neutrality.

## Claims

1. A method for recovering lithium carbonate from cathode material of wasted lithium-ion battery, the method comprising steps of:
(a) forming a pulp by adding a lithium iron phosphate (LiFePO₄) cathode active material of the wasted lithium-ion battery to water;
(b) introducing a reducing agent solution and carbon dioxide gas into the pulp to perform aqueous leaching, and then separating a solid-phase material from a liquid phase containing lithium carbonate (Li₂CO₃); and
(c) obtaining the lithium carbonateby crystallizing a solution obtained from the liquid phase containing the lithium carbonate.

2. The method of claim 1,
wherein the lithium iron phosphate cathode active material includes at least one selected from a group consisting of carbon (C) and sulfur (S).

3. The method of claim 1 or 2,
wherein a concentration of the pulp is 1% to 20%.

4. The method of any of claims 1 to 3,
wherein in the step (b), the reducing agent solution is a hydrogen peroxide (H₂O₂) solution.

5. The method of any of claims 1 to 4,
wherein in the step (b), the carbon dioxide gas is introduced at a rate of 10 L/min. or less.

6. The method of any of claims 1 to 5,
wherein in the step (b), a carbonation reaction occurs, and a reaction time of the carbonation reaction is within 2 hours.

7. The method of any of claims 1 to 6,
wherein in the step (c), a recovery rate of the lithium carbonate is 92% to 95%.

8. The method of any of claims 1 to 7,
wherein in the step (c), a purity of the lithium carbonate obtained is 99.5% or more.
